# EUROPEAN PATENT SPECIFICATION

(11) **EP 3 229 175 B1**
(45) Date of publication and mention of the grant of the patent: **16.11.2022**
(21) Application number: 16167472.6
(22) Date of filing: 28.04.2016
(51) Int. Cl.: G05B 15/02, G06V 10/22, G06V 10/10, G06V 20/20, G05B 23/02

(54) **MOBILE DEVICE AND METHOD TO GENERATE INPUT DATA FOR BUILDING AUTOMATION CONFIGURATION FROM CABINET IMAGES**
MOBILES GERÄT UND VERFAHREN ZUR ERZEUGUNG VON EINGABEDATEN FÜR DIE GEBÄUDEAUTOMATIONSKONFIGURATION AUS SCHRANKBILDERN
DISPOSITIF MOBILE ET PROCÉDÉ POUR GÉNÉRER DES DONNÉES D'ENTRÉE POUR CONFIGURATION D'AUTOMATISATION DE BÂTIMENTS À PARTIR D'IMAGES D'ARMOIRE

(30) Priority: 08.04.2016 EP 16000803
(43) Date of publication of application: 11.10.2017
(73) Proprietor: ABB Schweiz AG, 5400 Baden (CH)
(72) Inventor: Gamer, Thomas, 68782 Brühl (DE); Durdik, Zoya, 69469 Weinheim (DE); Lehnert, Christian, 58239 Schwerte (DE); Kantz, Florian, 64404 Bickenbach (DE)
(74) Representative: Bittner, Peter

(56) References cited:
- WO-A1-2009/064513
- WO-A1-2015/028978
- DE-A1-102013 102 635
- US-A- 5 956 665
- US-A1- 2004 073 854
- US-A1- 2004 119 735
- US-A1- 2012 259 973
- US-A1- 2014 183 254
- US-A1- 2016 070 629
- GOSHTASBY A A ED - IMPEDOVO SEBASTIANO ET AL: "Three-dimensional model construction from multiview range images: survey with new results", PATTERN RECOGNITION, ELSEVIER, GB, vol. 31, no. 11, 1 November 1998 (1998-11-01), pages 1705-1714, XP004134418, ISSN: 0031-3203, DOI: 10.1016/S0031-3203(98)00047-8

## Description

### Technical Field

The present invention generally relates to processing devices, and more particularly, relates to a computer-implemented method, a computer program product and a mobile device for generating input data for configuration of building automation systems.

### Background

In building automation, control devices (e.g., actuators such as dimming actuators or HVAC actuators) are typically installed in one or more cabinets located outside of the rooms which are controlled by the control devices. Control device, as used herein after, includes any form of electronic device which can affect a function of a building. Besides all kinds of actuators, this may also include fuse boxes or transformers. One cabinet typically has multiple control devices installed for controlling one or multiple rooms. Cabinet layouts for building automation systems are typically generated via PC-based tools during planning and engineering of the building automation system. They are typically implemented and validated during commissioning, and updated or used for maintenance work during operation phase. Thereby, the physical location of the system for creating the cabinet layout typically differs from the location of the physical cabinet and (to-be-) installed control devices during the engineering (e.g., a planner or integrator works in an office remote from the building and the cabinet is installed at the building site).
A method and system for installing, configuring and validating of network devices are described in US 2014/183254 A1. In the WO 2015/028978 A1 is described a method for inspection and maintenance of an electrical panel by means of augment reality, particularly in an industrial plant. US 2012/259973 A1 also shows a system and a method for managing computing systems.

During cabinet layout creation, a planner or integrator typically places control devices manually into a cabinet layout. Further, manual integration of device functionality into the overall system (e.g., connection to communication lines arriving from rooms or management systems) as well as manual basic parameterization and configuration of the control devices is a technically challenging and error-prone task. One challenge is that cabinet layouts are typically decided by the planer or integrator and are therefore not standardized.

Finally, for operation and maintenance of the building automation system, correct documentation of installed cabinets is required. There is therefore a need to provide such correct documentation for the various cabinets and to keep it up-to-date with possible changes during commissioning, repair and/or upgrade activities during the entire lifetime of the building automation system.

### Summary

According to embodiments of the disclosed invention, system, method and a corresponding program are provided to automatically create cabinet layouts on-site for building automation. Thereby, mobile devices and tagging techniques are used instead of remote PC-based solutions and manual engineering work. Such cabinet layouts are then used in order to extract pre-configured information from control devices as input for engineering, to automatically create a basic device configuration as input data used for building automation. The invention is set out in the appended set of claims.

In one embodiment, a mobile device is provided for generating input data for building automation configuration. The mobile device is communicatively coupled with a digital camera. The digital camera may be an integrated component of the mobile device (e.g., a camera of a smartphone or tablet computer).

The mobile device includes a data storage module configured to record a plurality of subsequent images of a cabinet from the digital camera at different zoom levels or under different viewing angles and to store a single image which integrates the plurality of recorded images with representations of all visible device identification markers of the cabinet. For example, the mobile device can be a smart phone or tablet computer with an integrated camera or any other mobile computing device which is connected to a digital camera (e.g., a web cam). A cabinet typically includes a plurality of slots where control devices can be installed. That is, a cabinet being installed at a building site typically includes a plurality of control devices for controlling at least a portion of a building. Thereby, one cabinet may include control devices controlling multiple rooms of the building. At least a subset of the plurality of control devices is associated with a device identification marker. For example, a device identification marker can be implemented as code label, string, encoded electromagnetic signal, or encoded optical signal (e.g., Visible Light Communication). The mobile device has respective decoding means to decode the particular device identification marker. For example, the mobile device may include a code label reader, such as a barcode reader or a QR code reader. Some mobile devices include RFID readers or NFC readers. Any other appropriate decoding function may be used to decode the information carried by the device identification marker of a respective control device.

The mobile device further includes a device identification module to identify the control devices of the subset by decoding the corresponding device identification markers, and to retrieve from a device library a device type for each identified control device. Some examples for control device types are: switch actuators (1-fold, 2-fold, etc.), dimmer actuators, constant-light-controllers, control devices with analogue and binary inputs, room controllers, and HVAC-controllers. The device identification module identifies a device type characterizing portion in the device identification marker and, for example, retrieve details characterizing the respective device type from a corresponding library. Such a library may be present on the mobile device or may be stored on a remote storage device which can be accessed by the mobile device.

The mobile device further includes an image processing module configured to determine a segmentation of the image from the recorded image by identifying walls and separators of the cabinet by applying image processing to the recorded image. One or more determined segments define the cabinet layout reflecting the physical structure of the cabinet. Each determined segment is associated with a physical location within the cabinet. Further, the image processing module provides image processing functions to determine the relative positions of the identified control devices within the cabinet layout based on their relative positions in the determined segments. The image processing module further determines the shapes of the identified control devices as the respective graphical representations, and inserts the respective graphical representations into the cabinet layout. The data storage module further saves graphical representations of the identified control devices in the cabinet layout in accordance with the respective device types.

In one embodiment, an optional distance recognition module is configured to automatically recognize distances within the cabinet by using any one of the following distance recognition methods: a trigonometric computation based on the height position of the camera with respect to the height of the cabinet and data from a gyroscope sensor of the mobile device, a comparison of a distance in the cabinet with a reference object of a known size, and a distance measurement using a depth sensor of the mobile device.

The mobile device further includes a provisioning module configured to provide a list of the identified control devices located inside the cabinet to a building automation system, and to further provide the cabinet layout with the graphical representations at the correct relative positions of the identified control devices within the cabinet.

The control devices in the cabinet are thus identified, including their relative positions/locations within the cabinet and the automatic identification of the respective device types. Additional information, required for engineering of control devices, can be drawn from device libraries, which are typically provided by the control device manufacturers. Since cabinet layout generation is based on the device identification, the cabinet layout and respective documentation can be automatically updated with device location/position and information. As a result, the complexity of the engineering process is reduced because a basic configuration is automatically generated ad hoc together with the appropriate documentation of the building automation system configuration.

In one embodiment, the mobile device can further include a user interface module configured to receive an identification confirmation input for a particular identified control device. For example, the user interface module can include a graphical user interface or an audio user interface which prompts a user of the mobile device with information regarding the automatically identified control devices. The user may then enter the identification confirmation input for the particular identified control device by interacting with a corresponding user interface object. If the received input confirms the identification of the particular control device, that is, in case the user confirms the result of the automatic control device identification, the user may be prompted with an editor to modify one or more properties of the particular identified control device. This allows enhancing the basic configuration data with additional technical configuration data regarding the particular control device. Further, in case of a positive identification confirmation, a representation of the particular control device is saved in the cabinet layout. This may include to save a graphic representation of the particular control device which has been retrieved from corresponding library (e.g., the device type library). If the received input rejects the identification of the particular control device, that is, in case the user does not confirm the automatic identification of the particular control device, the mobile device prompts the user for interaction and receives from the user further properties of the particular control device to enable completion of the identification of the particular control device. Upon completion, the particular control device is saved in the cabinet layout with the received further properties and a corresponding graphic representation.

In the real world, there may be control devices in the cabinet which are not associated with an identification marker. In one embodiment, the image processing module may be further configured to identify a control device by image-based identification using one or more standard image processing approaches. Such standard image processing approaches can identify characteristic edges in an image to extract the shape of the respective control device from the image data. The extracted shape may then be compared with the database storing the characteristic shapes of control devices and, in case of a match, retrieve the respective device type associated with the identified matching shape.

In one embodiment, a computer-implemented method for generating input data for building automation configuration is performed by the previously described mobile device in accordance with claim 6. If the cabinet size is known, for example, from a catalogue or because it is based on standard sizes (e.g., there exist typical combinations of cabinet height and width), device mapping may be further simplified as the number of segments and rows is then clearly defined.

The recording step of the method is a multi-stage process with a plurality of subsequent recording steps and a merging step to integrate the plurality of recordings into a single picture. This improves the readability of identification markers (e.g., barcodes, QR codes or characters of a string) in the image using any of the following alternatives. In a first alternative, where the resolution of the image and the entire cabinet is too low to decode some or all of the identification markers, a subsequent recording step with a higher zoom level allows to resolve the identification marker(s) and merge them into the original image of the entire cabinet. In a second alternative, an image is recorded with a camera position having an angle towards the cabinet which is exposed to light reflections, or which is hiding a device identification marker because of the shape and position of a respective control device. In such a case a plurality of subsequent recording steps under different viewing angles is performed and the subsequent image recordings are then merged into a single image of the cabinet so that all visible device identification markers are represented in the merged picture. Some control devices may provide a visual error code in case of malfunctioning. For example, an error code may be shown on a display of the control device or an error code maybe represented by a specific LED light pattern. Other visualizations are possible. The image processing module may be configured to decode such error codes and derive a malfunctioning state of the respective control device. In some cases the malfunctioning may be remedied by downloading corresponding configuration data from one or more corresponding device libraries.

In one embodiment, the method may further include any one of the following steps: automatically grouping and/or configuring the identified control devices based on the list of the identified control devices located inside the cabinet; automatically loading device descriptions, parameter settings and pre-configuration data for identified control devices from one or more device libraries; automatically assigning function to a particular control device based on its device type. The steps may facilitate the automated configuration of the building automation system as explained in more detail in the detailed description.

In one embodiment, a computer program product includes instructions that when loaded into a memory of a computing device (the mobile device) and executed by at least one processor of the computing device cause the computing device to execute the steps of the computer-implemented method to perform the functions of the mobile device as disclosed.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 is a simplified block diagram of a mobile device for automatic identification of control devices in a cabinet according to an embodiment of the invention;
FIG. 2 is a simplified flow chart of a computer-implemented method executed by the mobile device according to an embodiment of the invention;
FIG. 3 illustrates the insertion of a graphical representation of a control device into a cabinet layout according to one embodiment of the invention;
FIG. 4 illustrates the identification of a control device via its shape according to one embodiment of the invention;
FIG. 5 shows further optional steps of the computer-implemented method;
FIG. 6 illustrates an example for a multi-stage image recording process with subsequent recording steps at different zoom levels;
FIG. 7 is a simplified block diagram illustrating the interaction of the mobile device with a building automation system according to an embodiment of the invention; and
FIG. 8 is a diagram that shows an example of a generic computer device and a generic mobile computer device, which is used with the techniques described here.

### Detailed Description

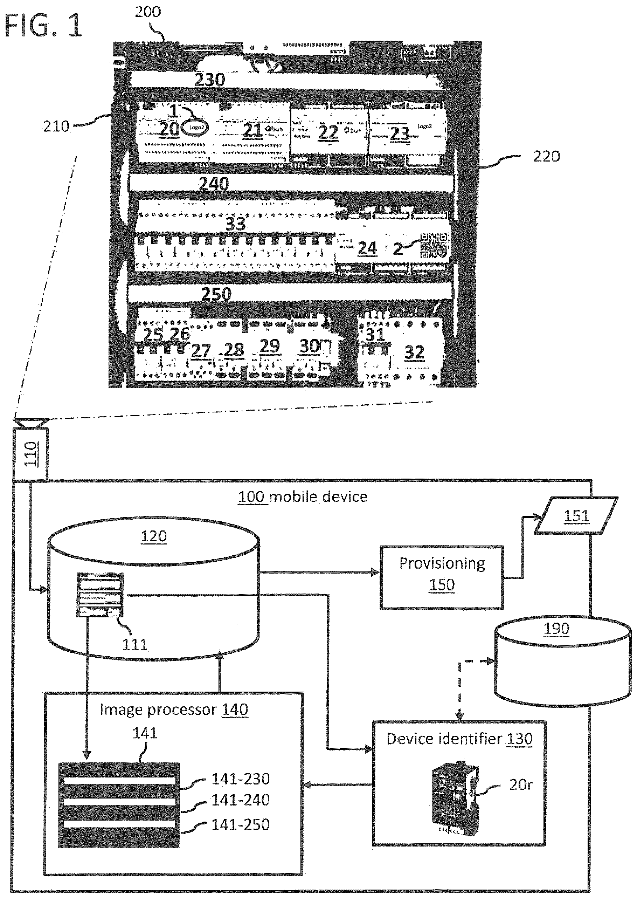

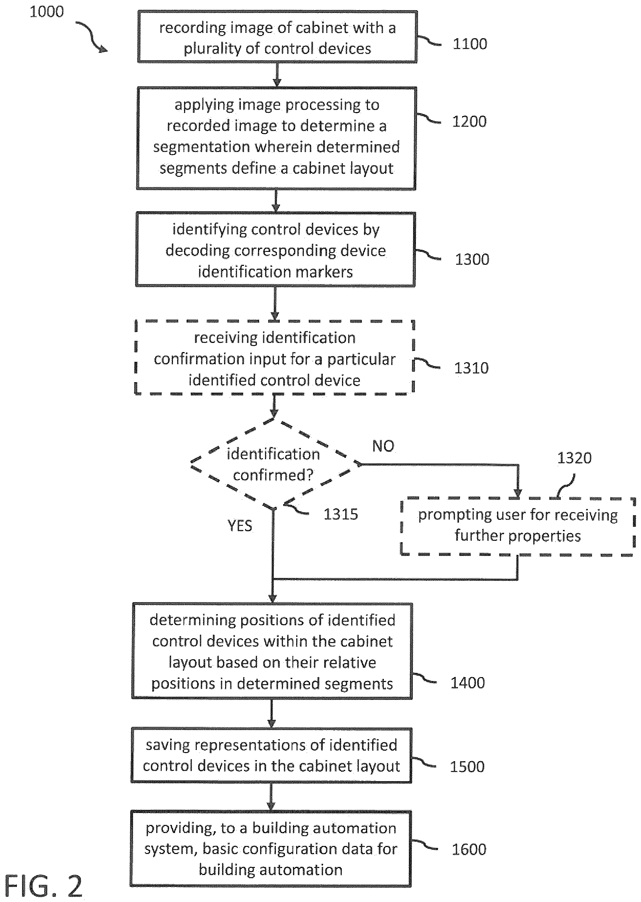

FIG. 1 is a simplified block diagram of a mobile device 100 for automatic identification of control devices in a cabinet 200 according to an embodiment of the invention. The automatic identification of the control devices within the cabinet provides basic configuration data for building automation system and allows to automatically generate respective cabinet layouts. FIG. 1 will be described in the context of FIG. 2 which is a simplified flow chart of a computer-implemented method 1000 executed by the mobile device. Reference numbers may refer to FIG. 1 and FIG. 2.

The mobile device 100 is communicatively coupled with a digital camera 110. The digital camera 110 may be an integral part of the mobile device or it may be connected to the mobile device, for example, by USB connection or even by a wireless connection. The mobile device can be any mobile computing device with the memory and one or more processors, such as for example, a smart phone or tablet computer. The camera 110 records images including objects which are located in the field of view of the camera. The field of view in FIG. 1 is illustrated by the dash-dotted lines originating at the camera symbol 110. In the example of FIG. 1, the field of view includes the cabinet 200 which is a cabinet including control devices 20 to 32 for controlling the building. The control functions of such a building are typically implemented in a building automation system. The building automation system has a configuration which allows to configure the control devices, such as switch actuators (1-fold, 2-fold, etc.), dimmer actuators, constant-light-controllers, control devices with analogue and binary inputs, room controllers and HVAC-controllers.

In FIG. 1, a portion of the cabinet 200 is shown. The cabinet 200 has a left wall 210 and the right wall 220 defining the width of the cabinet. The upper and lower walls are not shown. However, the interior of the cabinet is segmented by horizontal separators 230, 240, 250. In the following description only the three segments of the cabinet which are beneath the respective separator are referred to. The segment beneath separator 230 is referred to as the first segment, the segment beneath separator 240 is referred to as the second segment, and the segment beneath separator 250 is referred to as the third segment. The first segment includes four control devices 20 to 23. The control devices 20, 21 are of a first device type (e.g., constant-light-controllers) and the control devices 22, 23 are of a second device type (e.g., dimmer actuators). For example, control device 20 has an identification marker 1 in the form of an alpha-numeric character string printed on the device housing. The other control devices in the first segment may also have such identification markers in a printed string format. In the second segment a row 33 of similar control devices is included which may all be of a third device type (e.g., switch actuators). The row of control devices 33 is continued on the right by three further control devices 24 of a fourth device type (e.g., HVAC-controllers). One of the control devices 33 has a QR code 2 as identification marker. In the third segment, the control devices 25 to 32 are located. They may be of even further device types or have similar device types as the control devices in the other segments. They also may have identification markers attached to or printed on their housings. Some of the control devices may use other identification markers, such as for example, RFID chips (active or passive) providing technical data about the respective control device via a radio frequency signal to a corresponding RFID reader. In one embodiment, the mobile device 100 may include such an RFID reader. Other appropriate technologies, such as for example, near field communication NFC or other wireless technologies (e.g., Bluetooth, IBeacons, BLEs, visible light communication, and others), may also be used to implement identification markers. It is assumed that at least a subset 20, 24 of the plurality of control devices is associated with a device identification marker 1, 2.

Example embodiments for device identification technologies are:
- Label-based identification. Label-based image recognition can be done using bar codes, such as 1D (linear) or 2D bar codes (matrix, e.g. QR code), or other labels attached to a control device. In the latter case, it is possible to automatically extract extended decoded information valuable for engineering, such as device manufacturer, model, type, available options and configurations (e.g., a sticker to a LON device, i.e. a LON sticker, containing the communication address with a barcode to read the address electronically. LON is a protocol standard in building automation, such as the KNX or BACnet protocol standards). With label-based identification, device type and device instance can be identified.
- Image-based identification of control devices can be done by applying standard image processing approaches, such as edge or shape detection, template matching, using imprinted serial numbers and brand names, or others. Cloud analytics and Internet search can be used to automatically enhance the identification, e.g., for the identification of devices not being available in a device library but being available via automated Internet search and image comparison. With image-based identification, at least the device type can be identified. In combination with OCR identification, device instance identification is also possible if there is more specific visible information such as a unique serial number or a communication address imprinted on the device housing.
- OCR identification. OCR can be used in order to read the (imprinted) serial number, brand name, device series name, or other written marks on top of the installed device. In contrast to building automation devices visible to the building user, cabinet devices can have visible marks, as they are in a closed cabinet and not seen by normal building users. Similar to image-based identification, device type or device instance identification are possible depending on the available written and visible information.
- Wireless-signal-based identification can be done if signal emission technology is built into the control devices. For example, technologies, such as BLE (Bluetooth Low Energy), or WiFi capabilities, or transmitting tag devices, such as IBeacons, battery assisted RFIDs (active radio-frequency identification tags), or NFCs (Near Field Communication capable devices or chips) may be used. With wireless signals, device type and device instance can be identified.
- Passive reflection-based identification can be done using, for example, microwave radio signal reflectors (e.g., passive radio link deflectors,) or passive RFIDs. In this embodiment, the mobile device 100 is additionally equipped with corresponding emitters that can be built into the mobile device or that are coupled with the mobile device (e.g., Bluetooth-based emitters, such as used in retail article scanners). Modern mobile devices are sometimes pre-equipped with RFID readers, such as for example the Google Nexus 7 smartphone. With passive reflection, device type and device instance can be identified.

In the example, the camera 110 records 1100 an image 111 of the cabinet 200 and the image 111 is stored in a data storage module 120 of the mobile device 100. The modules of the mobile device may be implemented in software, in hardware, or as a combination of both.

The mobile device further has an image processing module 140 with standard image processing functions. Such image processing modules are commercially available. A commonly used software image processing library is openCV (released under a BSD license available at www.opencv.org) which is also available for mobile device operating systems, such as ANDROID from GOOGLE INC. or IOS for APPLE INC. An alternative image processing library is the Clmg Library available at www.cimg.eu.

From the recorded image 111, the image processor 140 determines a segmentation of the image by identifying the walls 210, 220 and the separators 230, 240, 250 by applying 1200 image processing to the recorded image. The determined segments 141-230, 141,240, 141-250 between the walls and separators define the cabinet layout 141 reflecting the physical structure of the cabinet 200. Each determined segment is associated with a corresponding physical location within the cabinet 200. The structure of the cabinet with separators limits the spatial location to place the control devices, therefore the identification of the cabinet layout is simplified.

In one embodiment, the mobile device can access a library with cabinet layouts and derive the type of the cabinet on the recorded image by comparing the determined segments (i.e., the determined cabinet layout structure) with corresponding data in the cabinet library. For example, by using distance measuring techniques as explained further down, the actual size of the cabinet and its segments may be estimated by the image processor 140 and the estimated values can be compared to the respective values in the cabinet library to identify a corresponding cabinet type. Once a cabinet type has been identified, the mobile device may use the corresponding cabinet layout provided by the cabinet library instead of generating the cabinet segments for the cabinet layout based on the recorded image.

The device identification module 130 of the mobile device 100 is configured to identify 1300 the control devices 20, 24 of the subset by decoding the corresponding device identification markers 1, 2. The device identifier 130 can be implemented as a sub-module of the image processor 140 or it can be implemented as a stand-alone module within the mobile device. In such embodiments where the identification marker is encoded in the image data 111 (e.g., character string, barcode, QR code, etc.) the device identifier 130 is advantageously part of the image processor 140 and uses corresponding image processing functions to perform the decoding of the identification marker from the image data. In other embodiments, for example, in cases where the device identification marker is encoded in a radio frequency signal, the device identifier 130 includes a corresponding reader component which is able to decode the identification markers from the received signals. Once a particular device identification marker is decoded by the device identifier 130, the device type of the respective control device which is associated with the decoded identification marker is retrieved. For example, the decoded identification marker can include a number, string or packet type which already includes the device type. In another embodiment, the identification marker includes information to link to a corresponding device type in a device library 190 via a mapping. The mapping may be implemented in the form of table or any other appropriate mapping data structure. In another embodiment, for example in the case of a QR code, a link to the corresponding device type in a device library may already be encoded in the identification marker. A device library 190 stores technical information about various device types. The device library 190 can be stored on the mobile device itself (e.g., in the data storage module 120) or it may be stored remotely. In case of a remote storage of the device libraries the device identifier 130 can access the remote storage location via appropriate network connections. For example, the device identifier may use a telecommunication connection or a LAN or WLAN connection or of the mobile device to access the device libraries.

By using standard image processing techniques the image processor 140 may identify the shape of the particular control device which is associated with the decoded device identification marker. Alternatively, once a control device is identified, the data regarding its size and shape may be retrieved from the device library which may include the respective information from the device manufacturer catalogue. As a consequence, it determines the relative positions of the identified control devices within the cabinet layout 141 based on their relative positions in the determined segments, In other words, the image processor determines the relative position of each identified control device and the shape of the identified control device. It is to be noted that the relative position of an identified control device may also be determined 1400 without knowing the shape of the control device. For example, the position of the respective device identification marker may be used as the position of the respective control device. This information would already be sufficient in order to determine the relative positions of control devices in view of neighboring control devices. Once the relative positions of the control devices are determined within segment the positions of the respective control devices within the cabinet are also known in view of the known segmentation.

A graphical representation 20r of the identified control device is then inserted into the cabinet layout 141 in the respective segment at the correct relative position and is saved 1500 together with the cabinet layout 141 in the data storage module 120. In one embodiment, the graphical representation 20r is determined by the image processor 140 by analyzing the edges of the control device picture which is associated with the respective identification marker and by computing the shape of the control device as the graphical representation. In another embodiment, the graphical representation 20r is retrieved from the device library through the identified device type.

Once the analysis of all identified segments within the cabinet is completed, the data storage module 120 stores the information about control devices physically located in the cabinet 200 as well as the information about the positions of the respective control devices in the cabinet layout 111. The mobile device 100 further includes a provisioning module 150 to provide 1600 a list 151 of the identified control devices located inside the cabinet 200 to a building automation system as part of basic configuration data for the building automation system. Further, it provides the cabinet layout 141 including the positions of the identified control devices within the cabinet 200. The provisioning module 150 can use any appropriate interface module (not shown) of the mobile device to transmit the basic configuration data to the building automation system.

The basic configuration data may further include the communication addresses of the identified control devices if such address data is, for example, printed on the housings or communicated via a radio frequency signal or received by the mobile device as input data from a user. In both cases the device identifier in image processor can be configured to decode this information and include it in the basic configuration data provided to the building automation system. In cases where the device identifier and image processor are able to determine a list of the modular extensions of the device this list of modular extensions may also be added to the basic configuration data.

In one embodiment, the image processor 140 may include an optional distance recognition module to automatically recognize distances within the cabinet by using any one of the following distance recognition methods: a trigonometric computation based on the height position of the camera in relation to the height of the cabinet and data from a gyroscope sensor of the mobile device, a comparison of a distance in the cabinet with a reference object of a known size, and a distance measurement using a depth sensor of the mobile device or 2D depth analysis for image processing in combination with any of the above data for calculating triangulation. For example, it can be advantageous to measure distances between control devices to derive the information how many control device slots are still available in the cabinet and at which position. For example, the Google Project Tango (available at www.google.com/atap/project-tango/) provides functions for using depth sensors in a mobile device to determine the shape of the objects where dedicated hardware (depth sensors) that can measure depths which can then be used in the triangulation calculation to increase precision.

In one embodiment, the mobile device prompts the user with a confirmation request 1315 regarding the automatic identification of a particular device and enables the user to adjust or modify information associated with identified control devices. Once the particular control device has been identified by the device identifier 130, the mobile device may prompt the user with information (e.g., a device type of the identified control device, technical details retrieved from the device library) associated with the identified control device. For example, this information may be presented to the user via the display of the mobile device in the form of a graphical user interface or via audio outputs of the mobile device in the form of an audio output. The user interface may be configured to allow the user to confirm the presented data and to input additional data or modify the presented data. Once the user confirms YES or rejects NO the presented data for a particular identified control device the mobile device receives 1310 a corresponding identification confirmation input from the user. If the received input confirms the identification of the particular control device and no additional or modified data is received, the particular control device is saved 1500 in the cabinet layout. In case the user provides such a positive identification confirmation input together with additional data (e.g. additional properties of the control device are entered in a property editor by the user) then the additional data is also saved together with the particular control device in the cabinet layout. If the received user input rejects NO the result of the automatic identification of the particular control device the user is prompted 1320 for receiving further properties of the particular control device. The user may then modify the properties of the particular control device (e.g., enter new device type) and confirm the modified data. Once the modified data is confirmed by the user the particular control device is saved 1500 in the cabinet layout with the received further modified properties.

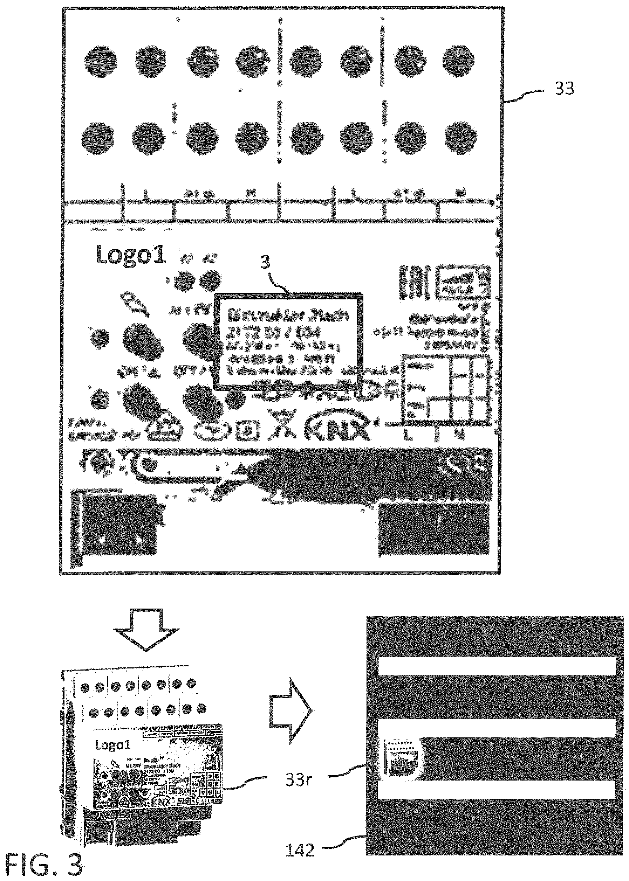

FIG. 3 illustrates the insertion of a graphical representation 33r of a control device 33 into a cabinet layout 142 according to one embodiment of the invention. In the example, a picture of the control device 33 is part of the image of a cabinet which is recorded by the digital camera and stored in the storage module of the mobile device. The device identifier recognizes that a device identification marker 3 is printed on the control device 33. For example, the device identifier may use optical character recognition (OCR) techniques to decode the character/string information of the device identification marker 3. In the example, as a result of the decoding step the device identifier determines the identification number "2172 00 / 004" as a content portion of the device identification marker 3. In the example, this identification number can be found in a mapping table. The identification number is mapped to a data record in a device library. The data record describes a device type "2-fold dimming actuator" and includes further technical information for this device type. In the example, the data record also includes a graphical representation 33r of the control device 33 which is retrieved by the image processor of the mobile device. In the example, the position of the control device 33 within the cabinet has been determined by the image processor as the left position in the second segment of the cabinet. Accordingly, the image processor inserts the graphical representation 33r at the respective position in the cabinet layout 142. Further, the control device 33 with a device type "2-fold dimming actuator" is now added to the list of devices located in the cabinet. That is, the basic configuration data for the building automation system is automatically updated accordingly.

In an alternative embodiment, the identification marker printed on the control device may be a barcode or a QR code which directly includes a link to a respective data record in the device library. In such an embodiment a mapping data structure is not necessary to retrieve the technical information from the device library. In this embodiment, the device identifier includes a barcode or a QR code reader being capable to decode the identification marker including the link.

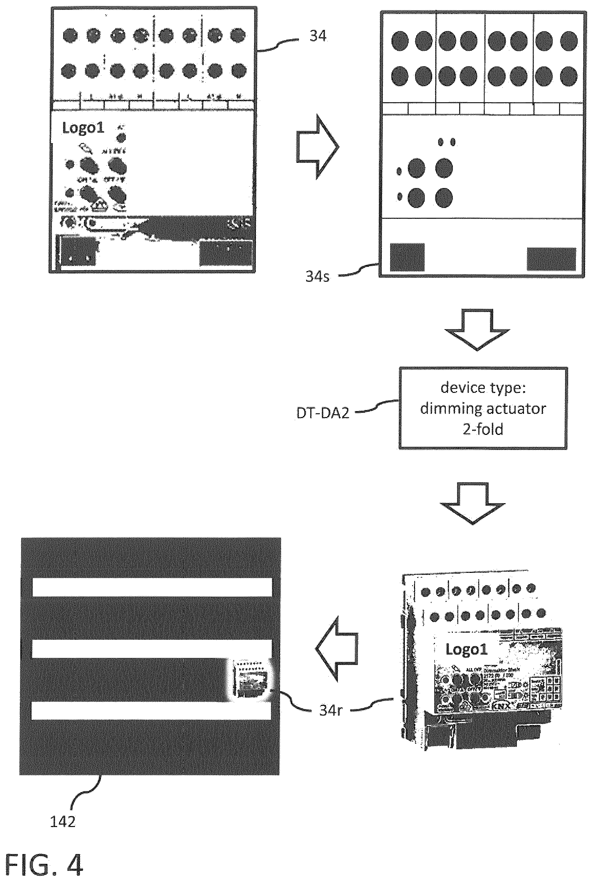

FIG. 4 illustrates the identification of a control device 34 via its shape according to one embodiment of the invention. In this example, it is assumed that the control device 34 has no readable labels printed on its housing that should be interpreted as device identification markers. Further it is assumed that no other active identification marker, such as for example an RFID chip or an optical marker, are present. In this case the device identifier may be configured to use layout characteristics of the control device 34 as device identification marker. In this embodiment, the device identifier includes image processing functions which allow to extract characteristic layout elements from the image of the control device (e.g., edges, buttons, switches, et cetera). The device identifier can then compare the extracted shape and layout elements of the control device 34 with a pool of reference patterns wherein each reference pattern shows a schematic layout view of a particular control device. For example, such pool of reference patterns may be stored in the data storage module of the mobile device or it may be part of a device library. Each reference pattern is mapped via a corresponding mapping data structure to a respective data record in the device library. In other words, each reference pattern is assigned to a particular device type. In the example of FIG. 4, the device identifier identifies the reference pattern 34s as the reference pattern having the highest similarity with the extracted layout characteristics of control device 34. The reference pattern 34s is mapped to the device type "dimming actuator 2-fold". A corresponding graphical representation 34r can be retrieved from the device library to be inserted into the cabinet layout 142 at the corresponding position (in the example, the right position in the second segment).

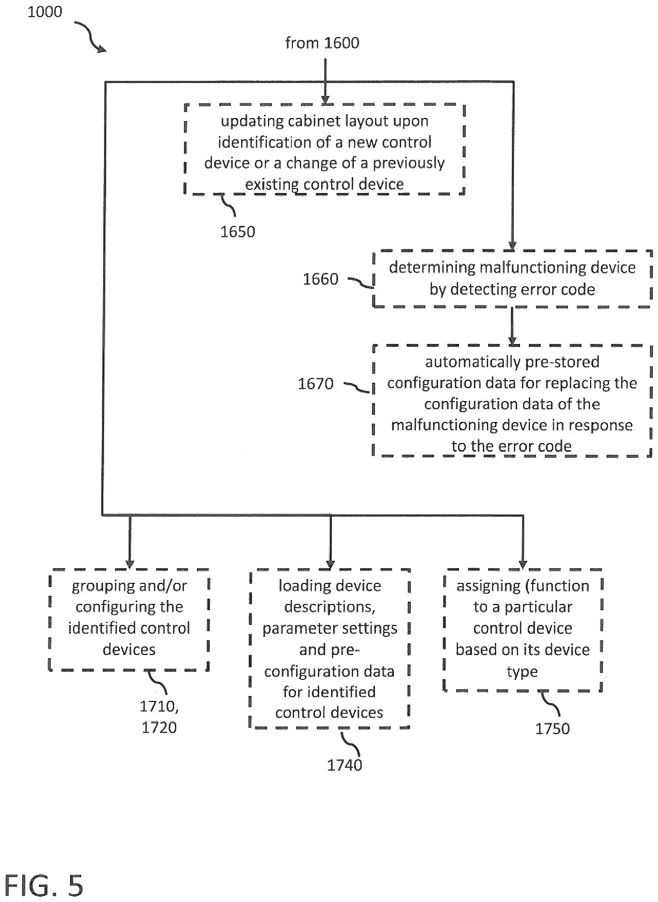

FIG. 5 shows further optional steps of the computer implemented method 1000.

In one embodiment, a cabinet layout of the particular cabinet may already exist. For example, in the course of maintenance or service activities, control devices may have been added, changed, or removed from the cabinet. A mobile device according to the invention may record a new image of the cabinet at this stage. The device identifier and image processor can analyze the image to identify the control devices currently present in the cabinet according to the previously disclosed method. The result may be compared to the already existing cabinet layout in the data storage module and the cabinet layout can be updated 1650 accordingly. In other words, upon identification of a new control device or a change of a previously existing control device, the cabinet layout is updated with the respective device type and device position information. The updated basic configuration data is then provided to the building automation system. This allows to keep the configuration of the building automation system consistent with real world changes of control devices at the building site in a robust and reliable manner.

In one embodiment, the mobile device may determine 1660 a particular identified control device as a malfunctioning device by detecting an error code of the particular identified control device. For example, the control device may have display to visualize the internal technical status of the control device. It is common practice that an internal error is typically associated with a specific error code that is displayed via such display. For example, the error code is something like "ERROR 221". The image processor can decode such error codes via standard OCR techniques and provide the technical status information of the control device to the automation system. In case the error can be remedied by a reconfiguration of the control device, the building automation system may automatically download 1670 (e.g., from one or more device libraries) predefined configuration data for replacing the configuration data of the malfunctioning device in response to the error code. The downloaded configuration data is then deployed to the malfunctioning control device. For example, the device library may include a register with all kinds of error codes wherein such error codes that can be handled by a reconfiguration on the control device are mapped (linked) to the respective downloadable predefined configuration data. Error codes may be provisioned in other ways. For example, control device may indicate its technical status via a light pattern of one or more LEDs mounted on the housing of the device. The image processor can then decode the light pattern and retrieve the corresponding error codes from a respective library. In such cases where the control devices equipped with an RFID transmitter, the error code may be encoded in a radio frequency signal received by an RFID reader of the mobile device (e.g. the RFID reader of the device identifier).

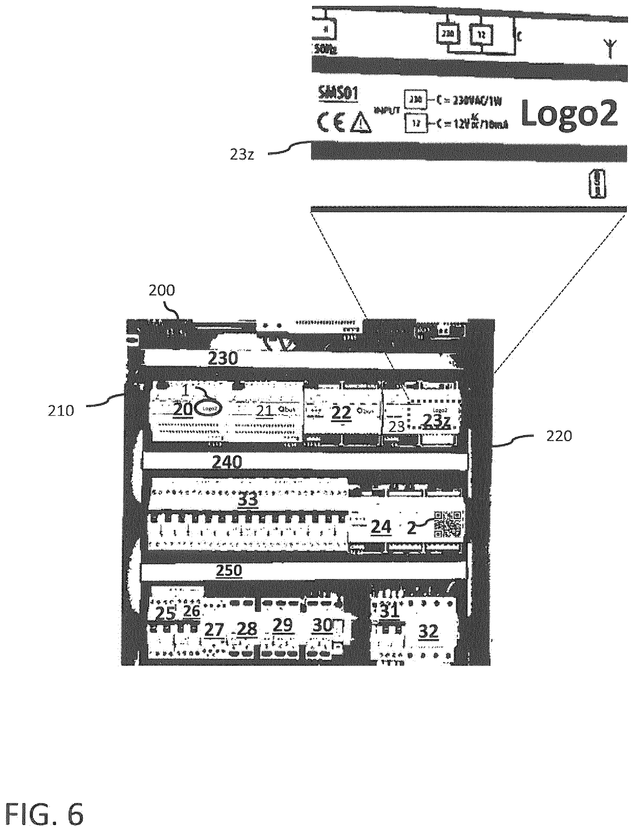

FIG. 6 illustrates an example for a multi-stage image recording process with subsequent recording steps at different zoom levels. The example shows the image of the cabinet 200 which is already known from FIG. 1. If the resolution of the image is not sufficient to resolve, for example, the device identification marker of the control device 23, a further image 23z can be recorded by zooming into the area including the identification marker of the control device 23. The corresponding zoom area is indicated by the dotted rectangle line. The further image 23z having a higher zoom level than the initial image of the cabinet includes the device identification marker of the control device 23 at a resolution level which can be processed by the image processor. Image processing methods based on object recognition and matching methods, which are also used, for example, for the merging of pictures from video sequences or from multiple pictures, are applicable to integrate the plurality of image recordings into a single picture. Examples for such image processing methods are: SURF (Speeded Up Robust Features) and SIFT (Scale Invariant Feature Transform). In other words, the mobile device records multiple images with sufficient resolution to enable the image processor and the device identifier to resolve the respective device identification markers for such control devices where the resolution of the initial cabinet image is insufficient. All those zoom images are then merged into the original image of the cabinet introducing the required level of detail for the automatic control device identification process.

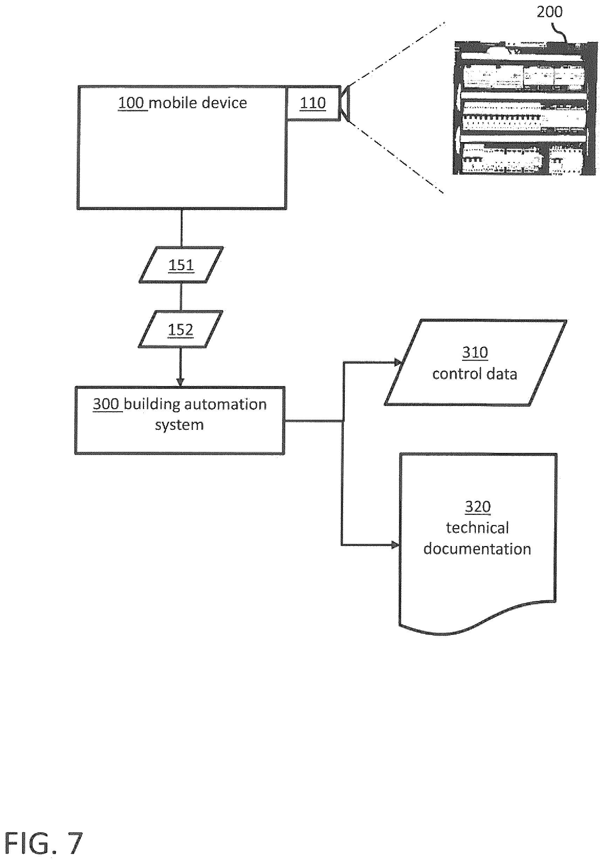

FIG. 7 is a simplified block diagram illustrating the interaction of the mobile device 100 with a building automation system 300 according to an embodiment of the invention. As described in the preceding disclosure, the mobile device 100 generates the basic configuration data 151 based on the image of the cabinet 200 recorded by the camera device 110. The basic configuration data includes the list of control devices identified for the cabinet 200, communication addresses of control devices (identified by the mobile device through the decoding of the corresponding device identification markers or received as input data from a user of the mobile device via an appropriate user interface), and/or other technical information for the identified control devices which is either retrieved automatically from appropriate device libraries or received as input data from the user. The basic configuration data is then provided to the building automation system 300. The system 300 uses the basic configuration data to generate control data 310 for the identified control devices. Further, the system 300 receives the cabinet layout data 152 including the visual representations of the control devices at the correct positions in the cabinet layout. This data 152 may be used by the system 300 to generate up-to-date technical documentation 300.

In one embodiment, the building automation system 300 can automatically group 1710 and/or configure 1720 (cf. FIG. 6) the identified control devices based on the basic configuration data including the list of the identified control devices located inside the cabinet. For example, if the system 300 knows that the building has a light which is compatible with a light actuator that was identified in the cabinet 200, it may propose the light and the light actuator to be grouped.

In one embodiment, the building automation system can automatically load 1740 (cf. FIG. 6) device descriptions, parameter settings and pre-configuration data for identified control devices from one or more device libraries. For control devices which do not need manual configuration and which are automatically identified by the mobile device 100, no manual effort is required to search for the control devices in the device library. The relevant data is automatically found and retrieved by the system 300 based on the provided basic configuration data 151.

In one embodiment, the building automation system can automatically assign 1750 a function to a particular control device based on its device type.

For example, building automation system 300 receives the basic configuration data including a first control device of type JRA/S and a second control device of type SA/S. If both devices are located in the same room, device addressing and locations can be configured in one logical group. Based on the identified device types a device description can be loaded to analyze available functionality of the devices: For example, JRA/S may be a blinds actuator, SA/S may be a light actuator or a switching actuator. Since the system 300 knows the functionality that should be hosted in the devices (e.g., blinds actuator, lights actuator) it can automatically assign the blinds actuator function to the device of type JRA/S and the light actuator function to the device of type SA/S so that triggering the function out of the system 300 (by sending corresponding control data 310) triggers an action on these two specific control devices. Since the control device SA/S provides different functions, the system 300 can send basic configuration data to the SA/S control device to be configured as a light actuator instead a switching actuator.

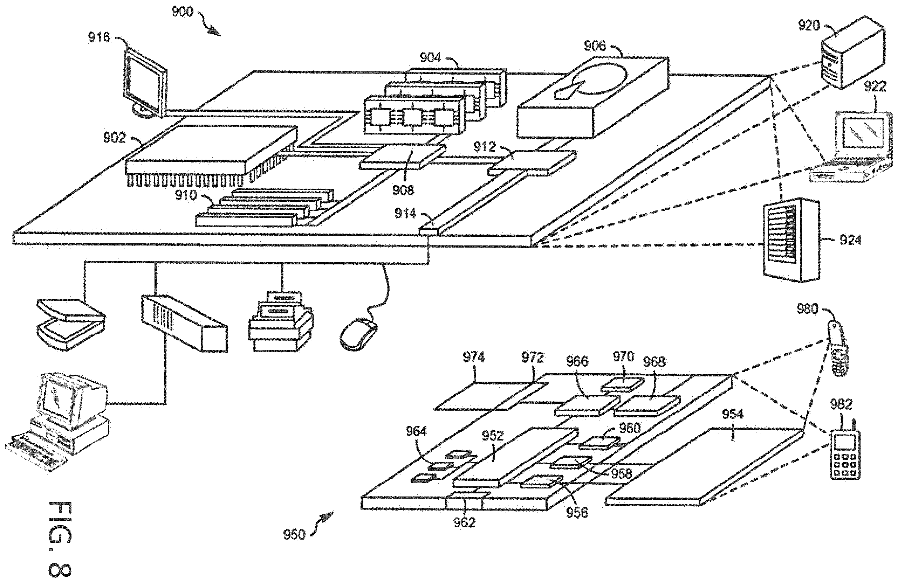

FIG. 8 is a diagram that shows an example of a generic computer device 900 and a generic mobile computer device 950, which is used with the techniques described here. Computing device 900 is intended to represent various forms of digital computers, such as laptops, desktops, workstations, personal digital assistants, servers, blade servers, mainframes, and other appropriate computers. Generic computer device may 900 correspond to a building automation system 300 as illustrated in FIG. 7. Computing device 950 is intended to represent various forms of mobile devices, such as personal digital assistants, cellular telephones, smart phones, and other similar computing devices. For example, computing device 950 may include the components illustrated in FIG. 1. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product contains instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, EDGE, UMTS, LTE, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a backend component (e.g., as a data server), or that includes a middleware component (e.g., an application server), or that includes a front end component (e.g., a client computer having a graphical user interface or a Web browser through which a user can interact with an implementation of the systems and techniques described here), or any combination of such backend, middleware, or frontend components. The components of the system can be interconnected by any form or medium of digital data communication (e.g., a communication network). Examples of communication networks include a local area network ("LAN"), a wireless local area network ("WLAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

## Claims

1. A mobile device (100) for generating input data for building automation configuration, the mobile device (100) being communicatively coupled with a digital camera (110), the mobile device comprising:
a data storage module (120) configured to record a plurality of subsequent images of a cabinet (200) from the digital camera (110) at different zoom levels or under different viewing angles and to store a single image (111) which integrates the plurality of recorded images,
the cabinet including a plurality of control devices (20 to 33) for controlling at least a portion of a building wherein at least a subset of the plurality of control devices is associated with a device identification marker (1, 2), wherein in case of the plurality of subsequent images of the cabinet being under different viewing angles, all visible device identification markers are represented in the single image of the cabinet, and wherein the data storage module (120) is further configured to save graphical representations (20r) of control devices (20) in a cabinet layout (141) in accordance with their respective device types, wherein a device type associated with a saved graphical representation is any of the following control device types: switch actuator, dimmer actuator, constant-light-controller, control device with analogue and binary inputs, room controller, and HVAC-controller;
a device identification module (130) to identify the control devices (20, 24) of the subset by decoding the corresponding device identification markers (1, 2), and to retrieve a device type for each identified control device;
an image processing module (140) configured to determine, from the single image (111) which integrates the plurality of recorded images,
a segmentation of the image by identifying walls (210, 220) and separators (230, 240, 250) of the cabinet via image processing wherein one or more determined segments between the walls and separators define the cabinet layout (141) reflecting the physical structure of the cabinet (200) and each determined segment (141-230, 141,240, 141-250) is associated with a physical location within the cabinet (200), and further configured to determine the relative positions of the identified control devices within the cabinet layout (141) based on their relative positions in the determined segments, and to determine the shapes of the identified control devices as the respective graphical representations, and to insert the respective graphical representations into the cabinet layout (141); and
a provisioning module (150) configured to provide as the input data, to a building automation system,
basic configuration data including a list of the identified control devices located inside the cabinet (200), and to provide the cabinet layout (141) with the graphical representations inserted into the cabinet layout (141) at the relative positions of the identified control devices within the cabinet (200).

2. The mobile device of claim 1, wherein a particular device identification marker is of any type selected from the group of: code label, alpha-numeric character string, encoded electromagnetic signal, and encoded optical signal, and wherein the mobile device has respective decoding means to decode the particular device identification marker

3. The mobile device of claim 1 or 2, further comprising:
a distance recognition module configured to automatically recognize distances within the cabinet by using any one of the following distance recognition methods: a trigonometric computation based on a height position of the camera relative to a height of the cabinet and data from a gyroscope sensor of the mobile device, a comparison of a distance in the cabinet with a reference object of a known size, and a distance measurement using a depth sensor of the mobile device.

4. The mobile device of any one of the previous claims, further comprising:
a user interface module configured to receive an identification confirmation input for a particular identified control device; and
if the received input confirms the identification of the particular control device, to save the graphical representation of the particular control device in the cabinet layout only in case of a positive identification confirmation, and/or to prompt a user of the mobile device with a property editor to modify one or more properties of the particular identified control device;
if the received input rejects the identification of the particular control device, to prompt the user for receiving further properties of the particular control device and saving the graphical representation of the particular control device in the cabinet layout with the received further properties.

5. The mobile device of any one of the previous claims, wherein the image processing module is further configured to identify a further control device by image-based identification.

6. A computer-implemented method (1000) performed by a mobile device communicatively coupled with a digital camera, the method for generating input data for building automation configuration, comprising:
recording (1100) an image of a cabinet, the cabinet including a plurality of control devices for controlling at least a portion of a building wherein at least a subset of the plurality of control devices is associated with a device identification marker, wherein recording (1100) the image is performed as a multi-stage process with a plurality of subsequent recording steps and further comprises: integrating the plurality of recorded images into a single picture, wherein a subsequent recording step is performed at a higher zoom level or under a different viewing angle than the initial recording step;
applying (1200) image processing to the single picture that integrates the plurality of recoded images to determine a segmentation of the image by identifying walls (210, 220) and separators (230, 240, 250) of the cabinet wherein one or more determined segments between the walls and separators define the cabinet layout (141) reflecting the physical structure of the cabinet and each determined segment is associated with a physical location within the cabinet;
identifying (1300) the control devices of the subset by decoding the corresponding device identification markers, and retrieving from a device library a device type for each identified control device;
determining (1400) the relative positions of the identified control devices within the cabinet layout based on their relative positions in the determined segments, and
determining the shapes of the identified control devices as respective graphical representations, and inserting the respective graphical representations into the cabinet layout (141);
saving (1500) the graphical representations of the identified control devices in the cabinet layout in accordance with their respective device types wherein a device type associated with a saved graphical representation is any of the following control device types: switch actuator, dimmer actuator, constant-light-controller, control device with analogue and binary inputs, room controller, and HVAC-controller; and
providing as the input data (1600), to a building automation system, basic configuration data including a list of the identified control devices located inside the cabinet (200), and the cabinet layout (141) with the graphical representations inserted into the cabinet layout (141) at the relative positions of the identified control devices within the cabinet (200).

7. The method of claim 6, wherein a particular device identification marker is of any type selected from the group of: code label, characters of a string, encoded electromagnetic signal, and encoded optical signal.

8. The method of claim 6 or 7, wherein the mobile device is configured to automatically recognize distances within the cabinet by using any one of the following distance recognition methods: a trigonometric computation based on a height position of the camera relative to a height of the cabinet and data from a gyroscope sensor of the mobile device, a comparison of a distance in the cabinet with a reference object of a known size, and a distance measurement using a depth sensor of the mobile device.

9. The method of any one of claims 6 to 8, further comprising:
receiving (1310) an identification confirmation input for a particular identified control device;
if the received input confirms the identification of the particular control device, saving (1500) the graphical representation of the particular control device in the cabinet layout only in case of a positive identification confirmation, and/or prompting (1310) a user of the mobile device with a property editor to modify one or more properties of the particular identified control device;
if the received input rejects the identification of the particular control device,
prompting (1320) the user for receiving further properties of the particular control device and saving (1500) the graphical representation of the particular control device in the cabinet layout with the received further properties.

10. The method of any one of claims 6 to 9, further comprising:
identifying (1350) a further control device by image-based identification using one or more standard image processing approaches.

11. The method of any one of claims 6 to 10, further comprising:
updating (1650), upon identification of a new control device or a change of a previously existing control device, the cabinet layout with the respective device type and device position information.

12. The method of any one of claims 6 to 11, further comprising:
determining (1660) a particular identified control device as a malfunctioning device by detecting an error code of the particular identified control device; and
automatically downloading (1670), from one or more device libraries, predefined configuration data for replacing the configuration data of the malfunctioning device in response to the error code.

13. The method of any one of claims 6 to 12, further comprising any one of the following steps:
automatically grouping (1710) and/or configuring (1720) the identified control devices based on the list of the identified control devices located inside the cabinet (200); automatically loading (1740) device descriptions, parameter settings and pre-configuration data for identified control devices from one or more device libraries; automatically assigning (1750) function to a particular control device based on its device type.

14. The method of any one of claims 6 to 13, wherein a communication address is decoded from a particular device identification marker for a particular control device, or wherein the communication address is received as a user input, and wherein the decoded communication address is included in the basic configuration data for the particular control device.

15. A computer program product comprising instructions that when loaded into a memory of a computing device and executed by at least one processor of the computing device cause the computing device to execute the steps of the computer-implemented method according to any one of the claims 6 to 14.

## Patentansprüche

1. Mobile Vorrichtung (100) zum Erzeugen von Eingabedaten für eine Gebäudeautomatisierungskonfiguration, wobei die mobile Vorrichtung (100) mit einer Digitalkamera (110) kommunikativ gekoppelt ist, die mobile Vorrichtung umfassend:
ein Datenspeichermodul (120), das konfiguriert ist, um eine Vielzahl von nachfolgenden Bildern eines Gehäuses (200) aus der Digitalkamera (110) bei verschiedenen Zoomstufen oder unter verschiedenen Betrachtungswinkeln aufzuzeichnen und ein einzelnes Bild (111), das die Vielzahl von aufgezeichneten Bildern integriert, zu speichern, wobei das Gehäuse eine Vielzahl von Steuervorrichtungen (20 bis 33) zum Steuern mindestens eines Abschnitts eines Gebäudes beinhaltet, wobei mindestens eine Teilmenge der Vielzahl von Steuervorrichtungen mit einer Vorrichtungsidentifikationsmarkierung (1, 2) verknüpft ist, wobei im Falle, dass die Vielzahl von nachfolgenden Bildern des Gehäuses unter verschiedenen Betrachtungswinkeln sind, alle sichtbaren Vorrichtungsidentifikationsmarkierungen in dem einzelnen Bild des Gehäuses dargestellt werden und wobei das Datenspeichermodul (120) ferner konfiguriert ist, um grafische Darstellungen (20r) von Steuervorrichtungen (20) in einem Gehäuselayout (141) gemäß ihren jeweiligen Vorrichtungsarten zu sichern, wobei eine Vorrichtungsart, die mit einer gesicherten grafischen Darstellung verknüpft wird, eine beliebige der folgenden Steuervorrichtungsarten ist: Schaltaktuator, Dimmeraktuator, Konstantlichtsteuerung, Steuervorrichtung mit analogen und binären Eingaben, Raumsteuerung, und HLK-Steuerung;
ein Vorrichtungsidentifikationsmodul (130), um die Steuervorrichtungen (20, 24) der Teilmenge durch ein Decodieren der entsprechenden Vorrichtungsidentifikationsmarkierungen (1, 2) zu identifizieren und, um eine Vorrichtungsart für jede identifizierte Steuervorrichtung abzurufen;
ein Bildverarbeitungsmodul (140), das konfiguriert ist, um aus dem einzelnen Bild (111), das die Vielzahl von aufgezeichneten Bildern integriert, eine Segmentierung des Bildes durch ein Identifizieren von Wänden (210, 220) und Separatoren (230, 240, 250) des Gehäuses über eine Bildverarbeitung festzulegen, wobei ein oder mehrere festgelegte Segmente zwischen den Wänden und den Separatoren das Gehäuselayout (141), das die physische Struktur des Gehäuses (200) widerspiegelt, definieren und jedes festgelegte Segment (141-230, 141,240, 141-250) mit einer physischen Lage innerhalb des Gehäuses (200) verknüpft ist und ferner konfiguriert ist, um die relativen Positionen der identifizierten Steuervorrichtungen innerhalb des Gehäuselayouts (141), basierend auf ihren relativen Positionen in den festgelegten Segmenten, festzulegen und die Formen der identifizierten Steuervorrichtungen als die jeweiligen grafischen Darstellungen festzulegen und die jeweiligen grafischen Darstellungen in das Gehäuselayout (141) einzufügen; und
ein Bereitstellungsmodul (150), das konfiguriert ist, um, an ein Gebäudeautomatisierungssystem, grundlegende Konfigurationsdaten, die eine Liste der identifizierten Steuervorrichtungen beinhaltet, die innerhalb des Gehäuses (200) gelegen sind, als die Eingabedaten bereitzustellen und, um das Gehäuselayout (141) mit den grafischen Darstellungen, die in das Gehäuselayout (141) an den relativen Positionen der identifizierten Steuervorrichtungen innerhalb des Gehäuses (200) eingefügt sind, bereitzustellen.

2. Mobile Vorrichtung nach Anspruch 1, wobei eine bestimmte Vorrichtungsidentifikationsmarkierung von einer beliebigen Art ist, die aus der Gruppe ausgewählt ist: Code-Etikett, alphanumerische Zeichenfolge, codiertes elektromagnetisches Signal und codiertes optisches Signal, und wobei die mobile Vorrichtung jeweilige Decodierungsmittel aufweist, um die bestimmte Vorrichtungsidentifikationsmarkierung zu decodieren

3. Mobile Vorrichtung nach Anspruch 1 oder 2, ferner umfassend:
ein Abstandserkennungsmodul, das konfiguriert ist, um Abstände innerhalb des Gehäuses durch Verwenden eines beliebigen der folgenden Abstandserkennungsverfahren automatisch zu erkennen: eine trigonometrische Berechnung basierend auf einer Höhenposition der Kamera relativ zu einer Höhe des Gehäuses und Daten aus einem Gyroskopsensor der mobilen Vorrichtung, einen Vergleich eines Abstands in dem Gehäuse mit einem Referenzobjekt einer bekannten Größe und eine Abstandsmessung unter Verwendung eines Tiefensensors der mobilen Vorrichtung.

4. Mobile Vorrichtung nach einem der vorstehenden Ansprüche, ferner umfassend:
ein Benutzeroberflächenmodul, das konfiguriert ist, um eine Identifikationsbestätigungseingabe für eine bestimmte identifizierte Steuervorrichtung zu empfangen; und
falls die empfangene Eingabe die Identifikation der bestimmten Steuervorrichtung bestätigt, um die grafische Darstellung der bestimmten Steuervorrichtung in dem Gehäuselayout nur im Falle einer positiven Identifikationsbestätigung zu sichern und/oder, um einen Benutzer der mobilen Vorrichtung mit einem Eigenschaftseditor aufzufordern, um eine oder mehrere Eigenschaften der bestimmten identifizierten Steuervorrichtung zu modifizieren;
falls die empfangene Eingabe die Identifikation der bestimmten Steuervorrichtung ablehnt, um den Benutzer zum Empfangen weiterer Eigenschaften der bestimmten Steuervorrichtung aufzufordern und Sichern der grafischen Darstellung der bestimmten Steuervorrichtung in dem Gehäuselayout mit den empfangenen weiteren Eigenschaften.

5. Mobile Vorrichtung nach einem der vorstehenden Ansprüche, wobei das Bildverarbeitungsmodul ferner konfiguriert ist, um eine weitere Steuervorrichtung durch bildbasierte Identifikation zu identifizieren.

6. Computerimplementiertes Verfahren (1000), das durch eine mobile Vorrichtung, die mit einer Digitalkamera kommunikativ gekoppelt ist, durchgeführt wird, das Verfahren zum Erzeugen von Eingabedaten für die Gebäudeautomatisierungskonfiguration umfassend:
Aufzeichnen (1100) eines Bildes eines Gehäuses, wobei das Gehäuse eine Vielzahl von Steuervorrichtungen zum Steuern mindestens eines Abschnitts eines Gebäudes beinhaltet, wobei mindestens eine Teilmenge der Vielzahl von Steuervorrichtungen mit einer Vorrichtungsidentifikationsmarkierung verknüpft ist, wobei ein Aufzeichnen (1100) des Bildes als ein mehrstufiger Vorgang mit einer Vielzahl von nachfolgenden Aufzeichnungsschritten durchgeführt wird und ferner umfasst: Integrieren der Vielzahl von aufgezeichneten Bildern in eine einzelne Aufnahme, wobei ein nachfolgender Aufzeichnungsschritt bei einer höheren Zoomstufe oder unter einem verschiedenen Betrachtungswinkel als der erste Aufzeichnungsschritt durchgeführt wird;
Anwenden (1200) der Bildverarbeitung auf die einzelne Aufnahme, die die Vielzahl von aufgezeichneten Bildern integriert, um eine Segmentierung des Bildes durch Identifizieren von Wänden (210, 220) und Separatoren (230, 240, 250) des Gehäuses festzulegen, wobei ein oder mehrere festgelegte Segmente zwischen den Wänden und den Separatoren das Gehäuselayout (141), das die physische Struktur des Gehäuses widerspiegelt, definieren und jedes festgelegte Segment mit einer physischen Lage innerhalb des Gehäuses verknüpft ist;
Identifizieren (1300) der Steuervorrichtungen der Teilmenge durch Decodieren der entsprechenden Vorrichtungsidentifikationsmarkierungen und Abrufen einer Vorrichtungsart aus einer Vorrichtungsbibliothek für jede identifizierte Steuervorrichtung;
Festlegen (1400) der relativen Positionen der identifizierten Steuervorrichtungen innerhalb des Gehäuselayouts basierend auf ihren relativen Positionen in den festgelegten Segmenten und Festlegen der Formen der identifizierten Steuervorrichtungen als jeweilige grafische Darstellungen und Einfügen der jeweiligen grafischen Darstellungen in das Gehäuselayout (141);
Sichern (1500) der grafischen Darstellungen der identifizierten Steuervorrichtungen in dem Gehäuselayout gemäß ihren jeweiligen Vorrichtungsarten, wobei eine Vorrichtungsart, die mit einer gesicherten grafischen Darstellung verknüpft ist, eine beliebige der folgenden Steuervorrichtungsarten ist: Schaltaktuator, Dimmeraktuator, Konstantlichtsteuerung, Steuervorrichtung mit analogen und binären Eingaben, Raumsteuerung, und HLK-Steuerung; und
Bereitstellen, als die Eingabedaten (1600) an ein Gebäudeautomatisierungssystem, grundlegender Konfigurationsdaten, die eine Liste der identifizierten Steuervorrichtungen beinhalten, die innerhalb des Gehäuses (200) gelegen sind, und des Gehäuselayouts (141) mit den grafischen Darstellungen, die in das Gehäuselayout (141) an den relativen Positionen der identifizierten Steuervorrichtungen innerhalb des Gehäuses (200) eingefügt sind.

7. Verfahren nach Anspruch 6, wobei eine bestimmte Vorrichtungsidentifikationsmarkierung von einer beliebigen Art ist, die aus der Gruppe ausgewählt ist: Code-Etikett, Zeichen einer Folge, codiertes elektromagnetisches Signal und codiertes optisches Signal.

8. Verfahren nach Anspruch 6 oder 7, wobei die mobile Vorrichtung konfiguriert ist, um Abstände innerhalb des Gehäuses durch Verwenden eines beliebigen der folgenden Abstandserkennungsverfahren automatisch zu erkennen: eine trigonometrische Berechnung basierend auf einer Höhenposition der Kamera relativ zu einer Höhe des Gehäuses und Daten aus einem Gyroskopsensor der mobilen Vorrichtung, einen Vergleich eines Abstands in dem Gehäuse mit einem Referenzobjekt einer bekannten Größe und eine Abstandsmessung unter Verwendung eines Tiefensensors der mobilen Vorrichtung.

9. Verfahren nach einem der Ansprüche 6 bis 8, ferner umfassend:
Empfangen (1310) einer Identifikationsbestätigungseingabe für eine bestimmte identifizierte Steuervorrichtung;
falls die empfangene Eingabe die Identifikation der bestimmten Steuervorrichtung bestätigt, Sichern (1500) der grafischen Darstellung der bestimmten Steuervorrichtung in dem Gehäuselayout nur im Falle einer positiven Identifikationsbestätigung und/oder Auffordern (1310) eines Benutzers der mobilen Vorrichtung mit einem Eigenschaftseditor, um eine oder mehrere Eigenschaften der bestimmten identifizierten Steuervorrichtung zu modifizieren;
falls die empfangene Eingabe die Identifikation der bestimmten Steuervorrichtung ablehnt, Auffordern (1320) des Benutzers zum Empfangen weiterer Eigenschaften der bestimmten Steuervorrichtung und Sichern (1500) der grafischen Darstellung der bestimmten Steuervorrichtung in dem Gehäuselayout mit den empfangenen weiteren Eigenschaften.

10. Verfahren nach einem der Ansprüche 6 bis 9, ferner umfassend:
Identifizieren (1350) einer weiteren Steuervorrichtung durch bildbasierte Identifikation unter Verwendung eines oder mehrerer Standardbildverarbeitungsansätze.

11. Verfahren nach einem der Ansprüche 6 bis 10, ferner umfassend:
Aktualisieren (1650), bei der Identifikation einer neuen Steuervorrichtung oder einer Änderung einer zuvor vorhandenen Steuervorrichtung, des Gehäuselayouts mit der jeweiligen Vorrichtungsart und den jeweiligen Vorrichtungspositionsinformationen.

12. Verfahren nach einem der Ansprüche 6 bis 11, ferner umfassend:
Festlegen (1660) einer bestimmten identifizierten Steuervorrichtung als eine falsch funktionierende Vorrichtung durch Erfassen eines Fehlercodes der bestimmten identifizierten Steuervorrichtung; und
automatisches Herunterladen (1670), aus einer oder mehreren Vorrichtungsbibliotheken, vordefinierter Konfigurationsdaten zum Ersetzen der Konfigurationsdaten der falsch funktionierenden Vorrichtung als Reaktion auf den Fehlercode.

13. Verfahren nach einem der Ansprüche 6 bis 12, ferner umfassend einen beliebigen der folgenden Schritte:
automatisches Gruppieren (1710) und/oder Konfigurieren (1720) der identifizierten Steuervorrichtungen basierend auf der Liste der identifizierten Steuervorrichtungen, die innerhalb des Gehäuses (200) gelegen sind;
automatisches Laden (1740) von Vorrichtungsbeschreibungen, Parametereinstellungen und Vorkonfigurationsdaten für die identifizierten Steuervorrichtungen aus einer oder mehreren Vorrichtungsbibliotheken;
automatisches Zuweisen (1750) einer Funktion zu einer bestimmten Steuervorrichtung basierend auf ihrer Vorrichtungsart.

14. Verfahren nach einem der Ansprüche 6 bis 13, wobei eine Kommunikationsadresse aus einer bestimmten Vorrichtungsidentifikationsmarkierung für eine bestimmte Steuervorrichtung decodiert wird oder wobei die Kommunikationsadresse als eine Benutzereingabe empfangen wird und wobei die decodierte Kommunikationsadresse in den grundlegenden Konfigurationsdaten für die bestimmte Steuervorrichtung beinhaltet ist.

15. Computerprogrammprodukt, umfassend Anweisungen, die, wenn sie in einen Speicher einer Computervorrichtung geladen und durch mindestens einen Prozessor der Computervorrichtung ausgeführt werden, die Computervorrichtung veranlassen, die Schritte des computerimplementierten Verfahrens nach einem der Ansprüche 6 bis 14 auszuführen.

## Revendications

1. Dispositif mobile (100) destiné à générer des données d'entrée permettant la configuration de l'automatisation de bâtiment, le dispositif mobile (100) étant couplé en communication avec une caméra numérique (110), le dispositif mobile comprenant :
un module de stockage de données (120) configuré pour enregistrer une pluralité d'images ultérieures d'une armoire (200) à partir de la caméra numérique (110) à différents niveaux de zoom ou sous différents angles de prise de vue et pour stocker une image unique (111) qui intègre la pluralité d'images enregistrées, l'armoire comportant une pluralité de dispositifs de commande (20 à 33) pour commander au moins une partie d'un bâtiment dans lequel au moins un sous-ensemble de la pluralité de dispositifs de commande est associé à un marqueur d'identification de dispositif (1, 2), dans lequel, dans le cas où la pluralité d'images ultérieures de l'armoire sont sous différents angles de prise de vue, tous les marqueurs d'identification de dispositif visibles sont représentés dans l'image unique de l'armoire, et dans lequel le module de stockage de données (120) est en outre configuré pour enregistrer des représentations graphiques (20r) de dispositifs de commande (20) dans une disposition d'armoire (141) conformément à leurs types de dispositifs respectifs, dans lequel un type de dispositif associé à une représentation graphique sauvegardée est l'un quelconque des types de dispositifs de commande suivants : actionneur de commutateur, actionneur de gradateur, régulateur à lumière constante, dispositif de commande avec entrées analogiques et binaires, régulateur d'ambiance et régulateur CVC ;
un module d'identification de dispositif (130) pour identifier les dispositifs de commande (20, 24) du sous-ensemble en décodant les marqueurs d'identification de dispositif correspondants (1, 2), et pour récupérer un type de dispositif pour chaque dispositif de commande identifié ;
un module de traitement d'image (140) configuré pour déterminer, à partir de l'image unique (111) qui intègre la pluralité d'images enregistrées, une segmentation de l'image en identifiant des parois (210, 220) et des séparateurs (230, 240, 250) de l'armoire par un traitement d'image dans lequel un ou plusieurs segments déterminés entre les parois et les séparateurs définissent la disposition de l'armoire (141) reflétant la structure physique de l'armoire (200) et chaque segment déterminé (141-230, 141, 240, 141-250) est associé à un emplacement physique à l'intérieur de l'armoire (200), et configuré en outre pour déterminer les positions relatives des dispositifs de commande identifiés à l'intérieur de la disposition d'armoire (141) en fonction de leurs positions relatives dans les segments déterminés, et pour déterminer les formes des dispositifs de commande identifiés en tant que représentations graphiques respectives, et pour insérer les représentations graphiques respectives dans la disposition d'armoire (141) ; et
un module de provisionnement (150) configuré pour fournir en tant que données d'entrée, à un système d'automatisation de bâtiment, des données de configuration de base comportant une liste des dispositifs de commande identifiés situés à l'intérieur de l'armoire (200), et pour fournir à la disposition d'armoire (141) les représentations graphiques insérées dans la disposition d'armoire (141) aux positions relatives des dispositifs de commande identifiés à l'intérieur de l'armoire (200).

2. Dispositif mobile selon la revendication 1, dans lequel un marqueur d'identification de dispositif particulier est d'un type quelconque sélectionné dans le groupe de : étiquette de code, chaîne de caractères alphanumériques, signal électromagnétique codé et signal optique codé, et dans lequel le dispositif mobile a un moyen de décodage respectif pour décoder le marqueur d'identification de dispositif particulier.

3. Dispositif mobile selon la revendication 1 ou 2, comprenant en outre :
un module de reconnaissance de distance configuré pour reconnaître automatiquement des distances à l'intérieur de l'armoire à l'aide de l'un quelconque des procédés de reconnaissance de distance suivants : un calcul trigonométrique basé sur une position en hauteur de la caméra par rapport à une hauteur de l'armoire et des données provenant d'un capteur gyroscopique du dispositif mobile, une comparaison d'une distance dans l'armoire avec un objet de référence de taille connue, et une mesure de distance à l'aide d'un capteur de profondeur du dispositif mobile.

4. Dispositif mobile selon l'une quelconque des revendications précédentes, comprenant en outre :
un module d'interface utilisateur configuré pour recevoir une entrée de confirmation d'identification pour un dispositif de commande identifié particulier ; et
si l'entrée reçue confirme l'identification du dispositif de commande particulier, la sauvegarde de la représentation graphique du dispositif de commande particulier dans la disposition d'armoire uniquement en cas de confirmation d'identification positive, et/ou l'invitation d'un utilisateur du dispositif mobile doté d'un éditeur de propriétés à modifier une ou plusieurs propriétés du dispositif de commande identifié particulier ;
si l'entrée reçue rejette l'identification du dispositif de commande particulier, l'invitation de l'utilisateur à recevoir d'autres propriétés du dispositif de commande particulier et la sauvegarde de la représentation graphique du dispositif de commande particulier dans la disposition d'armoire avec les autres propriétés reçues.

5. Dispositif mobile selon l'une quelconque des revendications précédentes, dans lequel le module de traitement d'image est en outre configuré pour identifier un autre dispositif de commande par identification basée sur l'image.

6. Procédé mis en œuvre par ordinateur (1000) effectué par un dispositif mobile couplé en communication avec une caméra numérique, le procédé de génération de données d'entrée pour la configuration d'automatisation de bâtiment, comprenant :
l'enregistrement (1100) d'une image d'une armoire, l'armoire comportant une pluralité de dispositifs de commande pour commander au moins une partie d'un bâtiment dans lequel au moins un sous-ensemble de la pluralité de dispositifs de commande est associé à un marqueur d'identification de dispositif, dans lequel l'enregistrement (1100) de l'image est effectuée sous la forme d'un processus à plusieurs étapes avec une pluralité d'étapes d'enregistrement ultérieures et comprend en outre : l'intégration de la pluralité d'images enregistrées en une seule image, dans lequel une étape d'enregistrement ultérieure est effectuée à un niveau de zoom supérieur ou sous un angle de prise de vue différent de l'étape d'enregistrement initiale ;
l'application (1200) d'un traitement d'image à l'image unique qui intègre la pluralité d'images recodées pour déterminer une segmentation de l'image en identifiant les parois (210, 220) et les séparateurs (230, 240, 250) de l'armoire, dans lequel un ou plusieurs segments déterminés entre les parois et les séparateurs définissent la disposition de l'armoire (141) reflétant la structure physique de l'armoire et chaque segment déterminé est associé à un emplacement physique à l'intérieur de l'armoire ;
l'identification (1300) des dispositifs de commande du sous-ensemble en décodant les marqueurs d'identification de dispositif correspondants, et en récupérant à partir d'une bibliothèque de dispositifs un type de dispositif pour chaque dispositif de commande identifié ;
la détermination (1400) des positions relatives des dispositifs de commande identifiés à l'intérieur de la disposition d'armoire en fonction de leurs positions relatives dans les segments déterminés, et la détermination des formes des dispositifs de commande identifiés en tant que représentations graphiques respectives, et l'insertion des représentations graphiques respectives dans la disposition d'armoire (141) ;
la sauvegarde (1500) des représentations graphiques des dispositifs de commande identifiés dans la disposition d'armoire conformément à leurs types de dispositifs respectifs, dans lequel un type de dispositif associé à une représentation graphique sauvegardée est l'un quelconque des types de dispositifs de commande suivants : actionneur de commutateur, actionneur de gradateur, régulateur à lumière constante, dispositif de commande avec entrées analogiques et binaires, régulateur d'ambiance et régulateur CVC ; et
la fourniture en tant que données d'entrée (1600), à un système d'automatisation de bâtiment, des données de configuration de base comportant une liste des dispositifs de commande identifiés situés à l'intérieur de l'armoire (200), et la disposition d'armoire (141) avec les représentations graphiques insérées dans la disposition d'armoire (141) aux positions relatives des dispositifs de commande identifiés à l'intérieur de l'armoire (200).

7. Procédé selon la revendication 6, dans lequel un marqueur d'identification de dispositif particulier est d'un type quelconque sélectionné dans le groupe de : étiquette de code, caractères d'une chaîne, signal électromagnétique codé et signal optique codé.

8. Procédé selon la revendication 6 ou 7, dans lequel le dispositif mobile est configuré pour reconnaître automatiquement les distances à l'intérieur de l'armoire à l'aide de l'un quelconque des procédés de reconnaissance de distance suivants : un calcul trigonométrique basé sur une position en hauteur de la caméra par rapport à une hauteur de l'armoire et des données provenant d'un capteur gyroscopique du dispositif mobile, une comparaison d'une distance dans l'armoire avec un objet de référence de taille connue, et une mesure de distance à l'aide d'un capteur de profondeur du dispositif mobile.

9. Procédé selon l'une quelconque des revendications 6 à 8, comprenant en outre :
la réception (1310) d'une entrée de confirmation d'identification pour un dispositif de commande identifié particulier ;
si l'entrée reçue confirme l'identification du dispositif de commande particulier, la sauvegarde (1500) de la représentation graphique du dispositif de commande particulier dans la disposition d'armoire uniquement en cas de confirmation d'identification positive, et/ou l'invitation (1310) d'un utilisateur du dispositif mobile doté d'un éditeur de propriétés pour modifier une ou plusieurs propriétés du dispositif de commande identifié particulier ;
si l'entrée reçue rejette l'identification du dispositif de commande particulier, l'invitation (1320) de l'utilisateur à recevoir d'autres propriétés du dispositif de commande particulier et la sauvegarde (1500) de la représentation graphique du dispositif de commande particulier dans la disposition d'armoire avec les autres propriétés reçues.

10. Procédé selon l'une quelconque des revendications 6 à 9, comprenant en outre :
l'identification (1350) d'un autre dispositif de commande par identification basée sur l'image à l'aide d'une ou de plusieurs approches de traitement d'image standard.

11. Procédé selon l'une quelconque des revendications 6 à 10, comprenant en outre :
la mise à jour (1650), lors de l'identification d'un nouveau dispositif de commande ou d'un changement d'un dispositif de commande existant précédemment, de la disposition de l'armoire avec le type de dispositif et les informations de position de dispositif respectifs.

12. Procédé selon l'une quelconque des revendications 6 à 11, comprenant en outre :
la détermination (1660) d'un dispositif de commande identifié particulier en tant que dispositif défaillant en détectant un code d'erreur du dispositif de commande identifié particulier ; et
le téléchargement automatique (1670), à partir d'une ou de plusieurs bibliothèques de dispositifs, de données de configuration prédéfinies pour remplacer les données de configuration du dispositif défaillant en réponse au code d'erreur.

13. Procédé selon l'une quelconque des revendications 6 à 12, comprenant en outre l'une quelconque des étapes suivantes :
le regroupement (1710) et/ou la configuration automatique (1720) des dispositifs de commande identifiés en fonction de la liste des dispositifs de commande identifiés situés à l'intérieur de l'armoire (200) ;
le chargement automatique (1740) de descriptions de dispositifs, de réglages de paramètres et de données de pré-configuration pour des dispositifs de commande identifiés à partir d'une ou de plusieurs bibliothèques de dispositifs ;
l'attribution automatique (1750) d'une fonction à un dispositif de commande particulier en fonction de son type de dispositif.

14. Procédé selon l'une quelconque des revendications 6 à 13, dans lequel une adresse de communication est décodée à partir d'un marqueur d'identification de dispositif particulier pour un dispositif de commande particulier, ou dans lequel l'adresse de communication est reçue en tant qu'entrée utilisateur, et dans lequel l'adresse de communication décodée est incluse dans les données de configuration de base pour le dispositif de commande particulier.

15. Produit-programme informatique comprenant des instructions qui, lorsqu'elles sont chargées dans une mémoire d'un dispositif informatique et exécutées par au moins un processeur du dispositif informatique, amènent le dispositif informatique à exécuter les étapes du procédé mis en œuvre par ordinateur selon l'une quelconque des revendications 6 à 14.
